# EUROPÄISCHE PATENTANMELDUNG

(11) **EP 3 554 064 A1**
(43) Veröffentlichungstag der Anmeldung: **16.10.2019**
(21) Anmeldenummer: 19167505.7
(22) Anmeldetag: 05.04.2019
(51) Int. Cl.: H04N 5/232, G02B 23/08, H04N 5/33, H04N 5/235

(54) **SENSORVORRICHTUNG**

(30) Priorität: 10.04.2018 DE 102018108477
(71) Anmelder: Krauss-Maffei Wegmann GmbH & Co. KG, 80997 München (DE)
(72) Erfinder: FISCHER, Dirk, 34127 Kassel (DE); JENDRASCHAK, Jürgen, 34127 Kassel (DE); SCHEIBEL, Dr. Axel, 34127 Kassel (DE)
(74) Vertreter: Feder Walter Ebert

(57) **Zusammenfassung**

Die Erfindung betrifft eine Sensorvorrichtung (1) zur Erfassung der Umgebung eines Objekts (2), insbesondere eines Fahrzeugs (2), mit einem drehbaren Ausblickteil (4), das eine Ausblicköffnung (4.1) aufweist, durch welche Strahlen (L0) der Umgebung in das Ausblickteil (4) einfallen können, wobei im Ausblickteil (4) mehrere Sensoren (5.1, 5.2, 5.3) zur Erfassung unterschiedlicher Spektralbereiche der Strahlen (L0) angeordnet sind.

## Beschreibung

Die Erfindung betrifft eine insbesondere optronische Sensorvorrichtung zur Erfassung der Umgebung eines Objekts, insbesondere eines Fahrzeugs, mit einem drehbaren Ausblickteil, das eine Ausblicköffnung aufweist, durch welche Strahlen der Umgebung in das Ausblickteil einfallen können. Weiterhin umfasst die Erfindung ein entsprechendes Verfahren.

Sensorvorrichtungen zur Erfassung der Umgebung eines Objekts sind in ganz unterschiedlicher Ausgestaltung bekannt. Beispielsweise kann es sich bei einer Sensorvorrichtung um ein Kamerasystem handeln, welches zur Erfassung der Umgebung an der Außenseite des Objekts angeordnet wird. Durch solch eine Sensorvorrichtung kann die Umgebung aufgenommen werden und die aufgenommenen Bilder können dann abseits oder auch im Objekt beispielsweise auf Monitoren und Displays dargestellt werden, ohne dass eine direkte Sicht erforderlich ist.

Aus diesem Grund wird eine solche indirekte Beobachtung der Umgebung auch oft im militärischen Bereich eingesetzt. Wenn Soldaten beispielsweise die Umgebung eines Fahrzeugs beobachten wollen, ist es nicht erforderlich, das geschützte Innere des Fahrzeugs zu verlassen oder den Kopf aus dem Fahrzeug zu strecken, sondern über eine entsprechende Sensorvorrichtung können Bilder der Umgebung aufgenommen und dann im Inneren des Fahrzeugs dargestellt werden. Es ist auf diese Weise möglich, die Fahrzeugumgebung indirekt aus dem geschützten Fahrzeuginneren zu beobachten, was die Gefahr für die Soldaten verringert.

Neben der Verwendung solcher Sensorvorrichtungen an Fahrzeugen kann in gleicher Weise auch die Umgebung von Flugzeugen, Bunkeranlagen oder anderen Objekte beobachtet werden.

In der Regel weisen Sensorvorrichtungen zur Beobachtung der Umgebung eine drehbare Ausblickeinrichtung mit einer Ausblicköffnung auf. Die Ausblickeinrichtung kann beispielsweise um eine horizontale Drehachse gedreht werden, so dass über eine solche Bewegung die Ausblicköffnung auf den zu beobachtenden Bereich der Umgebung ausgerichtet werden kann. Von der Umgebung reflektierte oder ausgesandte Strahlen können dann durch die Ausblicköffnung in die Ausblickeinrichtung einfallen und dort weiterverarbeitet werden.

Insbesondere im militärischen Bereich ist es oft erforderlich, die Umgebung nicht bloß in dem für einen Menschen sichtbaren Spektralbereich zu erfassen, sondern beispielsweise auch im Infrarotbereich, um so eine zuverlässige Beobachtung der Umgebung bei Dunkelheit zu ermöglichen. Es genügt daher oft nicht, an den entsprechenden Objekten nur eine einzige Sensorvorrichtung anzuordnen, sondern in der Regel müssen zur zuverlässigen Beobachtung der Umgebung mehrere Sensorvorrichtungen vorgesehen sein, die verschiedene Spektralbereiche erfassen können.

Wenn an einem Objekt jedoch mehrere Sensorvorrichtungen angeordnet sind, kann es dazu kommen, dass sich die verschiedenen Sensorvorrichtungen gegenseitig behindern. Werden bei einem militärischen Fahrzeug beispielsweise mehrere Sensorvorrichtungen auf dem Dach angeordnet, so kann es unter den Sensorvorrichtungen leicht zu gegenseitigen Abschattungen kommen, so dass nicht mehr die gesamte Umgebung zuverlässig erfasst werden kann. Um dieses Problem zu lösen, können beispielsweise neben verschiedenen Sensorvorrichtungen für verschiedene Spektralbereiche auch noch mehrere Sensorvorrichtungen für verschiedene Winkelbereiche vorgesehen sein. Dies erfordert es jedoch, eine ganze Vielzahl von Sensorvorrichtungen auf bzw. an dem Objekt anzuordnen.

Davon ausgehend stellt sich die Erfindung die **Aufgabe**, eine Sensorvorrichtung der eingangs genannten Art anzugeben, die eine zuverlässige Beobachtung der gesamten Umgebung ermöglicht.

Diese Aufgabe wird durch eine Sensorvorrichtung mit den Merkmalen des Patentanspruchs 1 gelöst.

Durch die Anordnung von mehreren Sensoren im Ausblickteil zur Erfassung unterschiedlicher Spektralbereiche der Strahlen können mit nur einer Sensorvorrichtung mehrere Spektralbereiche erfasst werden. Es ist nicht erforderlich, die Umgebung eines Objekts mit mehreren Sensorvorrichtungen zu erfassen, weshalb auch die beschriebene Problematik der gegenseitigen Abschattungen entfällt. Wenn mit einer Sensorvorrichtung alle erforderlichen Spektralbereiche erfasst werden können, sind daher auch nicht mehr mehrere Sensorvorrichtungen für verschiedene Winkelbereiche erforderlich. Dahingehend ist es vorteilhaft, wenn das Ausblickteil um 360 Grad drehbar ist.

In Weiterbildung der Erfindung wird vorgeschlagen, dass die Sensorvorrichtung einen Strahlteiler aufweist, der die Strahlen in mehrere Teilstrahlen aufteilt, wobei jedem der Sensoren ein Teilstrahl zugeleitet wird. Ein Strahlteiler ermöglicht es, die Strahlen auf einfache Weise zu teilen, so dass jedem Sensor ein Teilstrahl zugeleitet werden kann. Der Strahlteiler kann die Lichtstrahlen derart aufteilen, dass alle Teilstrahlen übereinstimmen. In diesem Fall können die Sensoren derart ausgestaltet sein, dass diese die einfallenden Teilstrahlen spektralbereichsspezifisch erfassen können. Beispielsweise kann ein Sensor den sichtbaren Spektralbereich des ihm zugeleiteten Teilstrahls erfassen, ein weiterer Sensor den NIR-Bereich des ihm zugeleiteten Teilstrahls und ein dritter Sensor den UV-Bereich des ihm zugeleiteten Teilstrahls. In einer weiteren Ausgestaltung ist es möglich, dass der Strahlteiler die Strahlen auch spektralbereichsspezifisch aufteilt, so dass den verschiedenen Sensoren jeweils nur Strahlen eines gewissen Spektralbereichs zugeleitet werden. Bei dieser Ausgestaltung müssen die Sensoren dann nur dafür ausgelegt sein, den entsprechenden Spektralbereich zu erfassen. Es ist ferner vorteilhaft, wenn pro Teilstrahl ein Sensor vorgesehen ist, so dass die Anzahl der Sensoren mit der Anzahl der Teilstrahlen übereinstimmt.

In einer alternativen Ausgestaltung weist die Sensorvorrichtung anstelle des Strahlteilers einen bewegbaren Spiegel auf, über welchen die Strahlen auf die Sensoren geleitet werden. Diese Ausgestaltung hat den Vorteil, dass die Intensität der Strahlen nicht aufgrund eines Strahlteilers verringert wird, sondern die Intensität der auf die Sensoren geleiteten Strahlen mit der des einfallenden Strahls übereinstimmt. Sie erfordert jedoch einen höheren Steuerungsaufwand, da der Spiegel mitunter sehr schnell bewegt werden muss, um den Sensoren die Strahlen sukzessive zuzuleiten. Die auf die Sensoren geleiteten Teilstrahlen stimmen dann mit den in das Ausblickteil einfallenden Strahlen überein. Der Spiegel kann derart bewegbar sein, dass die Sensoren sukzessive für eine bestimmte Zeitspanne belichtet werden. Die Belichtungszeiten der Sensoren können dabei in Abhängigkeit der von den Sensoren erfassten Spektralbereiche sein. Beispielsweise kann es erforderlich sein, einen Sensor zur Erfassung eines Spektralbereichs länger zu Belichten als einen Sensor zur Erfassung eines anderen Spektralbereichs.

Im Hinblick auf die Sensoren hat es sich als vorteilhaft erwiesen, wenn die Sensorbereiche der Sensoren abschnittsweise, insbesondere zeilenweise, auslesbar sind. Durch ein abschnittsweises Auslesen können die auszulesenden Bereiche mit einer hohen Auflösung ausgelesen werden. Vorteilhaft ist es dabei, wenn die Sensorbereiche schmal sind. Beispielsweise ist es möglich, nur eine Zeile des Sensors auszulesen. Alternativ ist es auch möglich, den Sensor als Zeilensensor auszugestalten, so dass dieser nur eine Zeile oder wenige auslesbare Zeilen aufweist.

Da bei einer nur abschnittsweisen Auslesung der Sensoren der erfassbare Bereich der Umgebung jedoch entsprechend klein ist, ist es auf diese Weise alleine nicht möglich, einen großen Teil der Umgebung zu erfassen. Wenn die drehbare Ausblickvorrichtung jedoch rotiert wird und die von den Sensoren erfassten schmalen Bilder dann zeitversetzt in Abhängigkeit der Drehgeschwindigkeit aneinander gesetzt werden, kann ein durchgängiges 360-Grad-Bild der Umgebung entstehen. Die Sensorvorrichtung kann so nach Art einer Zeilenkamera ausgestaltet sein. Das Bild kann aus vielen kleinen aneinandergereihten Einzelbildern bestehen, wobei die Breite der Einzelbilder mit der Breite des Sensorbereichs korreliert. Diese Aufnahmemethode hat den Vorteil, dass es nicht zu Verzerrungen des Bildes kommt, wie dies beispielsweise bei mit Fischaugenkameras bei Panoramaaufnahmen vorkommt. Insbesondere kann mit dieser Aufnahmemethode der oft im Randbereich von Bildern auftretende Bubble-Effekt vermieden werden. Wenn von dem Sensor nur eine Zeile ausgelesen wird oder wenn der Sensor als Einzeilensensor ausgestaltet ist, ist es erforderlich sehr viele Einzelbilder aneinander zu fügen, was jedoch zu einer hohen Bildqualität führt.

Das Ausblickteil kann automatisch und/oder dauerhaft gedreht werden, beispielsweise über einen Motor. Weiterhin ist es aber auch möglich, das Ausblickteil manuell zu bewegen. Die Sensorvorrichtung kann so auch nach Art eines Periskops genutzt werden. Es ist auch möglich, nur bestimmte Bereiche der Umgebung zu erfassen und nicht stets die gesamte 360-Grad-Umgebung.

Die Breite des auszulesenden Sensorbereichs und die Drehgeschwindigkeit des Ausblickteils können aneinander angepasst sein. Beispielsweise kann sich das Ausblickteil schneller drehen, wenn nur ein sehr schmaler Sensorbereich ausgelesen wird oder wenn der Sensor entsprechend schmal als Einzeilensensor oder als Wenigezeilensensor ausgestaltet ist. Durch die kontinuierliche Aufnahme von Bildern ist auch die Aufnahme eines Videos der Umgebung möglich, so dass beispielsweise in einem Fahrzeug ohne Zeitversatz stets die aktuelle Umgebung dargestellt wird.

Weiterhin kann die Umgebung auch ohne eine Rotation des Ausblickteils erfasst werden. Dann ist es jedoch zweckdienlich, wenn die ausgelesenen Sensorbereiche entsprechend breiter sind. Bei Sensoren, deren Sensorbereiche demnach wahlweise abschnittsweise oder im Ganzen ausgelesen werden können, kann die Umgebung bei Erfassung eines breiten Sensorbereichs auch ohne Rotation des Ausblickteils in einem großen Winkelbereich erfasst werden. Diese beiden Möglichkeiten der Aufnahme sind zudem auch kombinierbar.

Es hat sich weiterhin als vorteilhaft herausgestellt, wenn die Sensoren derart ausgestaltet sind, dass diese die Teilstrahlen jeweils in ein Bildsignal umsetzen können und diese einer Recheneinheit zugeleitet werden. Auf diese Weise kann aus den einfallenden Teilstrahlen ein elektrisches, insbesondere digitales, Signal erzeugt werden. Dieses Signal kann über eine Kabelverbindung oder über Drahtlosverbindung der Recheneinheit zugeleitet werden. Die Recheneinheit kann für jeden Sensor eine Eingangsschnittstelle aufweisen, die mit den entsprechenden Sensoren verbunden sein kann. Die Recheneinheit kann zudem auch aus einem größeren Bildausschnitt einen schmalen Bildstreifen extrahieren, insbesondere einen Bildstreifen mit einer minimalen Verzerrung.

Weiterhin hat es sich als vorteilhaft herausgestellt, wenn der Recheneinheit die momentane Winkelstellung des Ausblickteils in Form eines Winkelsignals zugeleitet wird und die Recheneinheit den Bildsignalen das momentane Winkelsignal zuordnen kann. Auf diese Weise kann in der Recheneinheit jedem schmalen Bildstreifen eine entsprechende Winkelstellung des Ausblickteils zugeordnet werden. Die Recheneinheit kann die eigehenden Bildsignale bündeln und diese einem entsprechenden Winkelsignal zuordnen. Es ist möglich, dass allen Bildsignalen dasselbe Winkelsignal zugeordnet wird, nämlich dann, wenn alle Bildsignale zur selben Zeit in der Recheneinheit ankommen. Den Bildsignalen werden die Winkelsignale zugeordnet, die der Winkelstellung des Ausblickteils im Moment der Erfassung der Strahlen bzw. der Teilstrahlen entsprechen. Zu einem bestimmten Zeitpunkt fällt beispielsweise ein Strahl auf einen Sensor, der zeilenweise ausgelesen wird. Dann wird der Recheneinheit von dem Sensor das Bildsignal übersandt und die Recheneinheit ordnet diesem Bildsignal die momentane Winkelstellung zu. Wird das Ausblickteil dann um ein kleines Stück gedreht, ändern sich auch die auf den Sensor fallenden Strahlen. Der Recheneinheit werden diese dann wieder zugeleitet und dort der entsprechenden neuen Winkelstellung zugeordnet. Dieser Vorgang kann sehr schnell bei einer kontinuierlichen Drehung des Ausblickteils vonstattengehen. Zur Erfassung der Winkelstellung des Ausblickteils kann ein Winkelsensor vorgesehen und mit der Recheneinheit verbunden sein oder die Recheneinheit kann selbst einen Winkelsensor aufweisen. Der Winkelsensor kann im Ausblickteil oder im Objekt angeordnet sein. Die Recheneinheit kann zusammen mit den Sensoren im Ausblickteil angeordnet sein. Die mit den entsprechenden Winkelstellungen versehenen Bildsignale können als Bildwinkelsignale bezeichnet werden.

In Weiterbildung der Erfindung ist eine Verarbeitungseinheit vorgesehen, die mit der Recheneinheit gekoppelt ist und der von der Recheneinheit ausgegebene Bildwinkelsignale zugeleitet werden können. Die Verarbeitungseinheit kann die eingehenden Bildwinkelsignale zu einem 360-Grad-Panoramabild zusammensetzen, insbesondere kann diese die eingehenden Daten in Abhängigkeit des entsprechenden Spektralbereichs zusammensetzen. Die Verarbeitungseinheit kann verschiedene Ansichten der Umgebung aufgrund der zugeleiteten Bildwinkelsignale erstellen. Beispielsweise kann diese eine Rundumsicht für den IR-Spektralbereich, den NIR-Spektralbereich, den UV-Spektralbereich und/oder des Bereichs des sichtbaren Lichts erstellen. Die Verarbeitungseinheit kann in oder abseits des Ausblickteils angeordnet sein. Vorteilhaft ist es, wenn die Verarbeitungseinheit nicht im Ausblickteil angeordnet ist, da diese eine vergleichsweise hohe Rechenleistung bereitstellen muss und daher eine große Baugröße aufweisen kann. Da das Ausblickteil drehbar ist und beispielsweise am oder auf dem Objekt angeordnet ist, ist es vorteilhaft, wenn dieses so leicht und so klein wie möglich ist. Alternativ können die Aufgaben der Verarbeitungseinheit, aber auch von der Recheneinheit übernommen werden.

Es hat sich weiterhin als vorteilhaft herausgestellt, wenn die Verarbeitungseinheit mit mindestens einer Bedien- und Anzeigeeinheit gekoppelt ist. Über die Bedien- und Anzeigeeinheit können die von der Verarbeitungseinheit erzeugten Bilder wahlweise abgerufen und dann dargestellt werden. Die Bedien- und Anzeigeeinheit kann dafür beispielsweise ein Display aufweisen sowie entsprechende Eingabegeräte. Es ist möglich, auf dem entsprechenden Display verschiedene Ansichten der Umgebung darzustellen, insbesondere die Ansichten verschiedener Spektralbereiche zu überlagern. Die Bedien- und Anzeigeeinheit kann modular aufgebaut und wahlweise mit der Verarbeitungseinheit gekoppelt sein. Es ist möglich, mit der Verarbeitungseinheit auch mehrere Bedien- und Anzeigeeinheiten zu verbinden, beispielsweise kann jeder Person eine einzelne Bedien- und Anzeigeeinheit zugeordnet sein. Die einzelnen Bedien- und Anzeigeeinheiten können mit derselben Verarbeitungseinheit verbunden werden. Die Verarbeitungseinheit kann somit nach Art eines Servers verschiedene Daten bereitstellen, die dann über die Bedien- und Anzeigeeinheiten wahlweise abgerufen und dargestellt werden können. Auf diese Weise kann auch die Darstellung der Umgebung für jede Person individuell angepasst werden.

Die Bedien- und Anzeigeeinheiten können vergleichsweise klein und handlich ausgeführt sein, da diese nur wenig Rechenleistung zur Verfügung stellen müssen. Weiterhin ist es auch möglich, dass auf den entsprechenden Displays der Bedien- und Anzeigeeinheiten nur gewisse Winkelbereiche und nicht die gesamte Umgebung des Fahrzeugs dargestellt wird. Es ist möglich, nur bestimmte Winkelbereiche auszuwählen und diese darzustellen, beispielsweise wenn in diesen Bereichen gegnerische Fahrzeuge zu erwarten sind oder bereits gesichtet wurden. Verschiedene Bedien- und Anzeigeeinheiten können auch untereinander kommunizieren. So ist es beispielsweise möglich, dass die Darstellungen auf einer Bedien- und Anzeigeeinheit in gleicher Weise auch auf einer anderen Bedien- und Anzeigeeinheit dargestellt wird.

Die aufgenommen Bilder in den verschiedenen Spektralbereichen können die gleiche Sichtachse aufweisen. Sie können daher besonders einfach miteinander überlagert angezeigt werden.

Weiterhin hat es sich als vorteilhaft herausgestellt, wenn die Sensorvorrichtung eine Optik zur Aufbereitung der Strahlen und/oder der Teilstrahlen aufweist. Die Optik kann die einfallenden Strahlen aufbereiten und so die die Aufnahmequalität erhöhen. Beispielsweise kann die Optik die Strahlen filtern, fokussieren oder aufweiten. Sie kann der Bildaufrichtung im Sinne eines Umkehrsystems dienen. Die Optik kann als Linsensystem mit einer oder mehreren hintereinander angeordneten Linsen ausgestaltet sein. Die Linsen können relativ zueinander bewegbar sein und so beispielsweise eine Zoomfunktion ermöglichen.

Die Optik kann im Strahlengang vor dem Strahlteiler angeordnet sein, so dass die einfallenden Strahlen vor dem Strahlteiler aufbereitet werden. Alternativ ist es jedoch auch möglich, die Optik hinter dem Strahlteiler anzuordnen, wobei es dann vorteilhaft ist, wenn für jeden Teilstrahl eine eigene Optik vorhanden ist. Die Optik kann mit der Recheneinheit gekoppelt sein und von dieser gesteuert werden. Weiterhin kann die Optik auch mit der Verarbeitungseinheit gekoppelt sein, so dass über die Bedien- und Anzeigegeräte die Optik gesteuert werden kann.

Weiterhin hat es sich als vorteilhaft herausgestellt, wenn die Sensorvorrichtung eine Umlenkeinrichtung zum Umlenken der Strahlen aufweist. Durch die Umlenkvorrichtung können wahlweise verschiedene Stahlen auf die Sensoren geleitet werden. Beispielsweise kann die Umlenkeinrichtung derart ausgestaltet sein, dass Strahlen aus einem größeren Höhenwinkelbereich auf die Sensoren treffen können. Die Umlenkeinrichtung ermöglicht ferner, dass die Sensoren nicht in der Richtung im Ausblickteil angeordnet sein müssen, in der die Strahlen in das Ausblickteil einfallen. Dies ermöglicht, dass die Sensoren derart angeordnet sein können, dass die Sensorbereiche in Normalrichtung zu der Drehachse der Ausblickeinrichtung angeordnet sind.

Im Hinblick auf die Umlenkeinrichtung hat es sich als vorteilhaft herausgestellt, wenn diese als in Elevation richtbarer Spiegel ausgestaltet ist. Durch eine insbesondere motorische Bewegung des Spiegels in Elevation können verschiedene Lichtstrahlen der Umgebung auf die Sensoren der Sensorvorrichtung umgeleitet werden. Es ist beispielsweise auch möglich, den kompletten Halbraum über der Sensoreinrichtung zu erfassen. Über die Umlenkeinrichtung kann auch der direkte Nahbereich des Fahrzeugs erfasst werden. Dies ist insbesondere dann möglich, wenn die Sensorvorrichtung in einem Randbereich des Objekts angeordnet ist, so dass dann beispielsweise auch der Bereich der Umgebung unterhalb der Sensorvorrichtung und dicht vor dem Objekt erfasst werden kann. Insbesondere wenn die Verbindung zwischen der Recheneinheit und der Verarbeitungseinheit drahtlos ausgestaltet ist, kann das Ausblickteil unabhängig und frei am oder auf dem Objekt positioniert werden.

Ferner hat es sich als vorteilhaft herausgestellt, wenn die Umlenkeinrichtung derart ausgestaltet ist, dass diese die Sichtachse stabilisieren kann. Durch eine Stabilisation der Sichtachse können deutlich schärfere Bilder aufgenommen werden. Besonders wenn sich das Objekt schnell bewegt, kann es leicht zu unscharfen Bildern kommen. Ist das Objekt beispielsweise als Fahrzeug ausgestaltet und bewegt sich dieses mit hoher Geschwindigkeit auf unebenem Gelände, erreichen die Bilder mitunter nicht die erforderliche Qualität, sondern es kann zu unscharfen Aufnahmen kommen. Besonders wenn die Sensorbereiche nur zeilenweise ausgelesen werden und sich das Objekt schnell bewegt, kann es aufgrund der Bewegung dazu kommen, dass die nacheinander aufgenommenen Zeilenbilder nicht exakt aneinanderpassen, was zu Unschärfe und zu Verzerrungen führen kann. Durch die Umlenkeinrichtung können diese Effekte vermieden werden. Die Umlenkeinrichtung kann als bewegbarer Spiegel ausgestaltet sein, mit welchem Bewegungen des Objekts ausgeglichen werden können. Der Spiegel kann dafür um eine, zwei oder auch drei Achsen schwenkbar sein und die Sichtlinie nach Art eines Gimbals stabilisieren. Die Umlenkeinrichtung kann mit der Recheneinheit gekoppelt sein und von dieser ausgerichtet werden, so dass sich eine Stabilisierung ergibt. Die Recheneinheit kann beispielsweise die Bildsignale der Sensoren auswerten und die Umlenkeinrichtung steuern, um die Sichtlinie bzw. die entsprechenden Bilder zu stabilisieren.

Es hat sich weiterhin als vorteilhaft herausgestellt, wenn das Ausblickteil gegenüber einem Träger drehbar gelagert ist. Der Träger kann die Verarbeitungseinheit sowie die Anzeige- und Bedieneinheiten umfassen. Ferner ist es möglich, dass der Träger innerhalb des Objekts und das Ausblickteil außen am Objekt angeordnet sind. Zwischen dem Ausblickteil und dem Träger kann eine Kabel- oder auch eine Drahtlosverbindung bestehen. Es hat sich insbesondere als vorteilhaft herausgestellt, wenn zwischen dem Ausblickteil und dem Träger ein Schleifkontakt zur Datenübertragung vorgesehen ist. Über den Schleifkontakt können beispielsweise Daten zwischen der Recheneinheit und der Verarbeitungseinheit übertragen werden. Der Schleifkontakt kann als Schleifring oder als Drehringübertrager ausgestaltet sein und das Ausblickteil kann konzentrisch auf dem Schleifkontakt angeordnet sein. Der Schleifkontakt kann als elektrischer Schleifkontakt oder als optischer Drehübertrager ausgestaltet sein.

Weiterhin hat es sich als vorteilhaft herausgestellt, wenn die Ausblicköffnung verschließbar ausgestaltet ist. Auf diese Weise können ein Lichteinfall in die Ausblicköffnung und eine Beschädigung der Sensoren verhindert werden, wenn beispielsweise hochenergetisches Laserlicht durch die Ausblicköffnung in das Ausblickteil einfällt. Weiterhin können so auch Rückreflexionen verhindert werden, die eine Ortung der Sichteinrichtung bzw. des Objekts erleichtern können. Die Ausblicköffnung kann über eine Blende verschließbar sein. Alternativ oder zusätzlich kann die Ausblicköffnung eine abdunkelbare Scheibe aufweisen. Die Scheibe kann spektralbereichsselektiv ausgeführt sein.

In Weiterbildung der Erfindung hat es sich als vorteilhaft herausgestellt, wenn mindestens ein Helligkeitssensor zur Erfassung der Helligkeit der Umgebung vorgesehen ist. Die Helligkeitssensoren können mit der Recheneinheit verbunden sein und die Recheneinheit kann aus den Sensordaten der Helligkeitssensoren die Belichtungszeiten für die insbesondere optronischen Sensoren ermitteln. Alternativ kann anstatt der Recheneinheit auch die Steuer- und Transferelektronik verwendet werden.

Zusätzlich oder alternativ zur Ermittlung der Lichtverhältnisse durch Helligkeitssensoren kann die Recheneinheit derart ausgestaltet sein, dass diese aus den Bildsignalen bestimmte Bildinformationen ermitteln kann und die Belichtungszeit der Sensoren in Abhängigkeit der Helligkeitsinformationen einstellt. Es können dafür beispielsweise Helligkeitsinformationen aus den Bildsignalen bzw. aus den aufgenommenen Bildern ausgewertet und dann die Belichtungszeiten für die folgenden Aufnahmen angepasst werden. Die Recheneinheit kann die Bilder beispielsweise in regelmäßigen Abständen auf deren Helligkeit und/oder Aufnahmequalität prüfen und dann die Belichtungszeit entsprechend anpassen. Die Überprüfung kann beispielsweise anhand einer Auswertung eines Histogramms der Bilder erfolgen. Alternativ kann anstatt der Recheneinheit auch die Steuer- und Transferelektronik verwendet werden. Mit dieser Methode ist es möglich, die Belichtung der Sensoren auch selektionsweise und/oder zeilenweise zu variieren, wodurch die Bildqualität weiter verbessert werden kann.

In der Praxis hat es sich als besonders vorteilhaft herausgestellt, wenn beide Methoden gleichzeitig eingesetzt werden.

Im Hinblick auf die eingangs genannten Probleme wird zur Lösung ferner ein Verfahren gemäß des Patentanspruchs 12 vorgeschlagen.

Das Verfahren kann analog zu den vorstehend beschriebenen Merkmalen der Sensorvorrichtung weitergebildet werden. Es ergeben sich die hinsichtlich der entsprechenden Merkmale beschriebenen Vorteile.

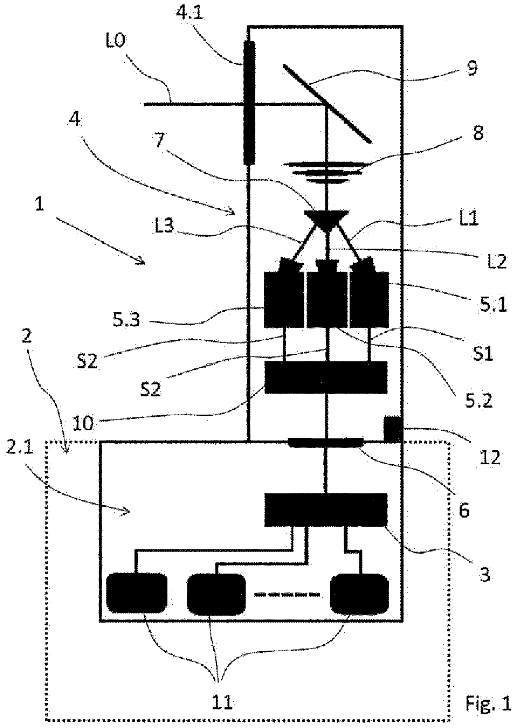

Unter Zuhilfenahme der Fig. 1 werden weitere Vorteile und Einzelheiten der Erfindung näher erläutert. Fig. 1 zeigt eine schematische Seitenansicht einer insbesondere optronischen Sensorvorrichtung.

Nachfolgend soll der Einsatz und die Ausgestaltung einer Sensorvorrichtung 1 für ein in der Fig. 1 nur schematisch dargestelltes Fahrzeug 2 beschrieben werden.

Um die Umgebung eines Fahrzeugs 2 auch aus dem geschützten Inneren beobachten zu können, kann eine Sensorvorrichtung 1 als Sichtvorrichtung vorgesehen sein. Diese Sensorvorrichtung 1 kann die Umgebung nach Art einer Kamera aufnehmen und die entsprechenden Bilder können dann ins Innere des Fahrzeugs 2 geleitet und dort auf Anzeigegeräten dargestellt werden. Solche Sensorvorrichtungen 1 werden oft im militärischen Bereich eingesetzt, da entsprechende Fahrzeuge 2 meist stark gepanzert sind und keine oder nur sehr kleine Fenster aufweisen, durch die eine ausreichende Erfassung der Umgebung jedoch nicht möglich ist.

Weiterhin genügt es im militärischen Bereich oft nicht, die Umgebung nur im für einen Menschen sichtbaren Spektralbereich zu erfassen. Denn auch eine Umgebungsbeobachtung anhand des IR-Bereichs, NIR-Bereichs und/ oder UV-Bereichs kann wichtige Informationen liefern, beispielsweise bei Nachtfahrten oder wenn Objekte getarnt oder versteckt sind.

Weiterhin ist es auch erforderlich, die Umgebung nicht nur in einem begrenzten Winkelbereich zu beobachten, sondern, um sich ein Bild der Gesamtsituation machen zu können, eine 360-Grad-Rundumbeobachtung zu ermöglichen.

Mit der nachfolgend beschriebenen Sensorvorrichtung 1 können zum einen verschiedene Spektralbereiche beobachtet werden und es ist zudem auch möglich, die gesamte 360-Grad-Fahrzeugumgebung zu erfassen.

Die Sensorvorrichtung 1 weist ein Ausblickteil 4 mit einer Ausblicköffnung 4.1 auf, durch welche Strahlen L0, insbesondere Lichtstrahlen im sichtbaren Bereich, im IR-Bereich, NIR-Bereich und/oder UV-Bereich, der Umgebung in das Ausblickteil 4 einfallen können. Das Ausblickteil 4 ist um n x 360 Grad drehbar.

Die Ausblicköffnung 4.1 weist eine in der Darstellung nicht gezeigte Blende auf, mit welcher die Ausblicköffnung 4.1 wahlweise auch verschlossen werden kann. Im Ausblickteil 4 fallen die Strahlen L0 zunächst auf eine als Spiegel 9 ausgestaltete Umlenkeinrichtung und werden dann zu einer Optik 8 geleitet. Die Optik 8 besteht aus mehreren relativ zueinander verschiebbaren Linsen und ermöglicht somit eine Zoomfunktion. Im Strahlengang ist nach der Optik 8 ein Strahlteiler 7 angeordnet, der die eintreffenden Strahlen L0 in mehrere Teilstrahlen L1, L2, L3 aufteilen kann. Im gezeigten Beispiel wird der Stahl L0 in drei insbesondere identische Teilstrahlen L1, L2, L3 aufgeteilt, die dann jeweils einem Sensor 5.1, 5.2, 5.3 zugeleitet werden.

Um verschiedene Spektralbereiche des Strahls L0 bzw. der Teilstrahlen L1, L2, L3 zu erfassen, sind die Sensoren 5.1, 5.2, 5.3 derart ausgestaltet, dass diese jeweils einen Spektralbereich erfassen können. Im Beispiel ist der Sensor 5.1 dafür eingerichtet, das NIR-Spektrum des Teilstrahls L1 zu erfassen, der Sensor 5.2 ist dafür eingerichtet, das UV-Spektrum des Teilstrahls L2 zu erfassen und der Sensor 5.3 ist dafür eingerichtet, den für einen Menschen sichtbaren Spektralbereich des Teilstrahls L3 zu erfassen. Die Sensoren 5.1, 5.2, 5.3 wandeln die erfassten Strahlen L1, L2, L3 jeweils in entsprechende Bildsignale S1, S2, S3 um, die dann einer Recheneinheit 10 zugeleitet werden.

Die Recheneinheit 10 ist mit einem Winkelsensor 12 gekoppelt, der die Winkelstellung des Ausblickteils 4 erfasst. Die Recheneinheit 10 ordnet den Bildsignalen S1, S2, S3 die momentane Winkelstellung des Ausblickteils 4 zu und leitet die Daten dann über einen Schleifring 6 an eine Verarbeitungseinheit 3 weiter. Die Funktion der Rotation des Ausblickteils 4 sowie der Erfassung der Winkelstellung und die genauere Ausgestaltung der Sensoren 5.1, 5.2, 5.3 soll nachfolgend näher erläutert werden.

Die insbesondere optronischen Sensoren 5.1, 5.2 und 5.3 weisen einen vorbestimmten Sensorbereich auf, auf den Lichtstrahlen einfallen und die dann von den Sensoren 5.1, 5.2, 5.3 erfasst werden können. Die Sensoren 5.1, 5.2, 5.3 erfassen dabei jedoch immer nur einen sehr schmalen Sensorbereich, beispielsweise eine Zeile. Demnach entsprechen auch die von den Sensoren ausgegebenen Bildsignale S1, S2, S3 dann nur einem sehr schmalen Bildausschnitt, beispielsweise nur einer Pixelreihe. Durch Rotation des Ausblickteils 4 kann so jedoch die Umgebung Zeile für Zeile erfasst werden. Aus diesem Grund ist es jedoch erforderlich, den schmalen Bildausschnitten die Winkelstellung des Ausblickteils 4 im Moment der Aufnahme zuzuordnen. Anhand der Winkelinformationen können die einzelnen Bildausschnitte dann im Anschluss zur Erzeugung eines 360-Grad-Panoramabildes der Umgebung aneinander gesetzt werden.

Da die Erzeugung eines entsprechendes Panoramabildes möglichst schnell erfolgen und diese auch für alle von den Sensoren 5.1, 5.2, 5.3 erfassten Spektralbereiche parallel ablaufen soll, wird eine entsprechend große Rechenleistung benötigt. Da das Ausblickteil 4 jedoch zur Erzeugung von 360-Grad-Bildern ständig rotiert werden muss, ist es vorteilhaft, die zu bewegende Masse möglichst gering zu halten.

Die Auswertung und weitere Verarbeitung der Einzelbilder geschieht daher nicht in der im Ausblickteil 4 angeordneten Recheneinheit 10, welche als Steuer- und Transferelektronik fungiert, sondern in der der Recheneinheit 10 nachgeschalteten Verarbeitungseinheit 3. Diese ist in einem Träger 2.1 angeordnet, der im Fahrzeug 2 selbst angeordnet ist und daher nicht zusammen mit dem Ausblickteil 4 rotiert wird.

Um eine Datenverbindung zwischen der Recheneinheit 10 und der Verarbeitungseinheit 3 zu ermöglichen, ist zwischen dem Ausblickteil 4 und dem Träger 2.1 bzw. dem Fahrzeug 2 ein elektrischer oder optischer Drehübertrager, insbesondere ein Schleifring 6, angeordnet. Die von der Recheneinheit 10 erzeugten Bildwinkelsignale, welche die Bildsignale S1, S2, S3 sowie die entsprechenden Winkelsignale beinhalten, werden über den Schleifring 6 an die Verarbeitungseinheit 3 weitergeleitet.

In der Verarbeitungseinheit 3 werden die einzelnen Bildausschnitte dann zu einem 360-Grad-Panoramabild zusammengesetzt. Aufgrund der drei Sensoren 5.1, 5.2, 5.3 werden in der Verarbeitungseinheit 3 auch parallel drei 360-Grad-Panoramabilder erzeugt. Die Verarbeitungseinheit 3 kann die verschiedenen Bilder der unterschiedlichen Spektralbereiche überlagern und digital aufbereiten, wofür diese mit einer Videoprozessoreinheit ausgestaltet ist.

Zur Darstellung der von der Verarbeitungseinheit 3 aufgearbeiteten Bilddaten ist diese mit mehreren Bedien- und Anzeigegeräten 11 verbunden. Über die Bedien- und Anzeigegeräte 11 können der Verarbeitungseinheit 3 Befehle gegeben werden, die Bilder zu überlagern, mit künstlichen Objekten zu versehen, zu vergrößern, zu verkleinern oder in anderer Weise aufzuarbeiten. Die aufgearbeiteten Bilder werden den Bedien- und Anzeigegeräten 11 dann zur Verfügung gestellt.

Auf den Bedien- und Anzeigegeräten 11 können die von der Verarbeitungseinheit 3 bereitgestellten Bilder abgerufen und angezeigt werden. Über die Bedien- und Anzeigegeräte 11 kann dabei auch gesteuert werden, was für eine Umgebungsansicht dargestellt werden soll. Mittels der verschiedenen Bedien- und Anzeigegeräte 11 besteht die Möglichkeit der Anwahl verschiedener und individuell aufbereiteter Bilder der Umgebung.

Nachfolgend soll nun noch eine alternative Vorgehensweise bei der Erfassung der Umgebung beschrieben werden, wobei jedoch ebenfalls die in der Fig. 1 dargestellte Sensorvorrichtung 1 verwendet werden kann. Die Vorgehensweise der Erfassung der Umgebung unterscheidet sich gegenüber dem vorstehend beschriebenen Vorgehen dadurch, dass die Sensoren 5.1, 5.2, 5.3 nicht bloß einen sehr schmalen Sensorbereich erfassen, sondern einen breiteren Bereich. Die den Sensoren 5.1, 5.2, 5.3 nachgeschaltete Recheneinheit 10 extrahiert dann aus den entsprechenden Bildern schmale Bildbereiche mit einer möglichst geringen Verzerrung. Diese können dann von der Verarbeitungseinheit 3 in der vorstehend beschriebenen Weise zusammengesetzt und den Bedien- und Anzeigegeräten 11 zur Verfügung gestellt werden.

Wenn die Sensoren 5.1, 5.3, 5.3 breite Bereiche erfassen, können so auch entsprechende Bilder der Umgebung aufgenommen werden. In diesem Fall ist es nicht erforderlich, das Ausblickteil 4 ständig zu rotieren, sondern dieses kann dann nach Art eines Periskops auf die zu beobachteten Bereiche der Umgebung gerichtet werden und die entsprechenden Bilder werden auf den Bedien- und Anzeigegeräten 11 dargestellt.

**Bezugszeichen:**
- 1: Sensorvorrichtung
- 2: Fahrzeug, Objekt
- 2.1: Träger
- 3: Verarbeitungseinheit
- 4: Ausblickteil
- 4.1: Ausblicköffnung
- 5.1: Sensor
- 5.2: Sensor
- 5.3: Sensor
- 6: Schleifring
- 7: Strahlteiler
- 8: Optik
- 9: Spiegel, Umlenkvorrichtung
- 10: Recheneinheit
- 11: Bedien- und Anzeigegerät
- 12: Winkelsensor

- L0: Strahlen
- L1: Teilstrahl
- L2: Teilstrahl
- L3: Teilstrahl

- S1: Bildsignal
- S2: Bildsignal
- S3: Bildsignal

## Patentansprüche

1. Sensorvorrichtung zur Erfassung der Umgebung eines Objekts (2), insbesondere eines Fahrzeugs (2), mit einem drehbaren Ausblickteil (4), das eine Ausblicköffnung (4.1) aufweist, durch welche Strahlen (L0) der Umgebung in das Ausblickteil (4) einfallen können, **dadurch gekennzeichnet,**
**dass** im Ausblickteil (4) mehrere Sensoren (5.1, 5.2, 5.3) zur Erfassung unterschiedlicher Spektralbereiche der Strahlen (L0) angeordnet sind.

2. Sensorvorrichtung nach Anspruch 1, **gekennzeichnet durch** einen Strahlteiler (7), der die Strahlen (L0) in mehrere Teilstrahlen (L1, L2, L3) aufteilt, wobei jedem der Sensoren (5.1, 5.2, 5.3) ein Teilstrahl (L1, L2, L3) zugeleitet wird.

3. Sensorvorrichtung nach einem der vorhergehenden Ansprüche, **dadurch gekennzeichnet, dass** die Sensorbereiche der Sensoren (5.1, 5.2, 5.3) abschnittsweise, insbesondere zeilenweise auslesbar sind.

4. Sensorvorrichtung nach einem der vorhergehenden Ansprüche **dadurch gekennzeichnet, dass** die Sensoren (5.1, 5.2, 5.3) derart ausgestaltet sind, dass diese die Teilstrahlen (L1, L2, L3) jeweils in ein Bildsignal (S1, S2, S3) umsetzen können und diese einer Recheneinheit (10) zugeleitet werden.

5. Sensorvorrichtung nach Anspruch 4, **dadurch gekennzeichnet, dass** der Recheneinheit (10), die momentane Winkelstellung des Ausblickteils (4) in Form eines Winkelsignals zugeleitet wird und die Recheneinheit (10) den Bildsignalen (S1, S2, S3) das Winkelsignal zuordnen kann.

6. Sensorvorrichtung nach einem der Ansprüche 4 oder 5, **gekennzeichnet durch** eine Verarbeitungseinheit (3), die mit der Recheneinheit (10) gekoppelt ist und der von der Recheneinheit (10) ausgegebene Daten zugeleitet werden können.

7. Sensorvorrichtung nach Anspruch 6, **gekennzeichnet durch** mindestens eine mit der Verarbeitungseinheit (3) gekoppelte Bedien- und Anzeigeeinheit (11).

8. Sensorvorrichtung nach einem der vorhergehenden Ansprüche, **gekennzeichnet durch** eine Optik (8) zur Aufbereitung der Strahlen (L0) und/oder der Teilstrahlen (L1, L2, L3).

9. Sensorvorrichtung nach einem der vorhergehenden Ansprüche, **gekennzeichnet durch** eine Umlenkeinrichtung (9) zum Umlenken der Strahlen (L0).

10. Sensorvorrichtung nach Anspruch 9, **dadurch gekennzeichnet, dass** die Umlenkeinrichtung (9) als ein in Elevation richtbarer Spiegel ausgestaltet ist.

11. Sensorvorrichtung nach einem der Ansprüche 9 oder 10, **dadurch gekennzeichnet, dass** die Umlenkeinrichtung (9) derart ausgestaltet ist, dass diese die Sichtachse stabilisieren kann.

12. Sensorvorrichtung nach einem der vorhergehenden Ansprüche, **gekennzeichnet durch** mindestens einen Helligkeitssensor zur Erfassung der Helligkeit der Umgebung.

13. Sensorvorrichtung nach einem der Ansprüche 4 bis 12, **dadurch gekennzeichnet, dass** die Recheneinheit (10) derart ausgestaltet ist, dass diese aus den Bildsignalen (S1, S2, S3) Helligkeitsinformationen ermitteln kann und die Belichtungszeit der Sensoren (5.1, 5.2, 5.3) in Abhängigkeit der Helligkeitsinformationen einstellt.

14. Verfahren zur Erfassung der Umgebung eines Objekts (2), insbesondere eines Fahrzeugs (2), mit einem drehbaren Ausblickteil (11), wobei das Ausblickteil (4) eine Ausblicköffnung (4.1) aufweist, durch welche Strahlen (L0) der Umgebung in das Ausblickteil (4) einfallen, **dadurch gekennzeichnet,**
**dass** im Ausblickteil (4) mehrere Sensoren (5.1, 5.2, 5.3) angeordnet sind, wobei jeder der Sensoren (5.1, 5.2, 5.3) einen unterschiedlichen Spektralbereich der Strahlen (L0) erfasst.
